Europäisches Patentamt

European Patent Office

Office européen des brevets

(11) Veröffentlichungsnummer: **0 294 710 B1**

# (12) EUROPÄISCHE PATENTSCHRIFT

(45) Veröffentlichungstag der Patentschrift: 09.10.91

(51) Int. Cl.⁵: **B65G 47/24**

(21) Anmeldenummer: 88108847.0

(22) Anmeldetag: 03.06.88

(54) **Vorrichtung zum Überführen und Wenden von Hygienepapiererzeugnissen.**

(30) Priorität: 12.06.87 DE 3719574

(43) Veröffentlichungstag der Anmeldung:
14.12.88 Patentblatt 88/50

(45) Bekanntmachung des Hinweises auf die
Patenterteilung:
09.10.91 Patentblatt 91/41

(84) Benannte Vertragsstaaten:
CH DE FR GB IT LI NL SE

(56) Entgegenhaltungen:
EP-A- 0 229 277
DE-A- 3 520 613
FR-A- 2 340 685

(73) Patentinhaber: **Paper Converting Machine
GmbH
Mühlweg 4
W-6707 Schifferstadt(DE)**

(72) Erfinder: **Meyer, Dieter, Dipl.-Ing.
Dürer Strasse 41
W-6700 Ludwigshafen(DE)**

(74) Vertreter: **Brommer, Hans Joachim, Dr.-Ing. et
al
Patentanwälte Dipl.-Ing. R. Lemcke Dr.-Ing.
H.J. Brommer Bismarckstrasse 16 Postfach
4026
W-7500 Karlsruhe 1(DE)**

## Beschreibung

Die Erfindung geht aus von einer Vorrichtung gemäß dem Oberbegriff von Patentanspruch 1. Eine derartige Vorrichtung ist durch die DE-OS 35 20 613 bekannt. Dabei erfolgt der Drehantrieb des Winkels über ein Hebelsystem mit Kette.

Außerdem ist durch das DE-GM 79 31 246 eine Vorrichtung zum Überführen und Wenden von Hygienepapiererzeugnissen bekannt, die auf einer Zuführbahn ankommen und zur Bildung eines Gebindes auf einer Abführbahn hintereinander aufzureihen sind, wobei zwischen Zuführbahn und Abführbahn eine Wendeeinheit angeordnet ist, die um eine horizontale Achse schwenkbar ist und zwischen ihren Flügeln das Produkt aufnimmt. Dadurch können die zu verpackenden Gegenstände aus einem ankommenden Produktstrom separiert, um 90° gewendet und sodann lückenlos hintereinander zu einem verpackungsfähigen Gebinde zusammengestellt werden.

Schließlich gehört durch die ältere Patentanmeldung DE-P 36 00 817 ein Wendestern zum Stand der Technik, der mitsamt seiner Drehlagerung zwischen einer Zuführbahn und einer Abführbahn verschiebbar geführt ist. Die Drehbewegung wird hier also mit einer translatorischen Bewegung überlagert, so daß der Wendestern neben seiner Wendefunktion die zusätzliche Funktion eines Abschiebers erfüllt.

Durch die hier vorliegende Erfindung soll die eingangs beschriebene Vorrichtung mit dem zweiflügeligen Winkel dahingehend verbessert werden, daß sie sich durch hohe Arbeitsgeschwindigkeit und entsprechend kurze Taktzeiten auszeichnet und speziell für die Behandlung von empfindlichen Hygienepapierprodukten geeignet ist.

Diese Aufgabe wird erfindungsgemäß durch die Merkmale im Kennzeichen des Patentanspruches 1 gelöst. Wesentlich dabei ist, daß die Führungsbahn selbst verschwenkbar ist und daß dadurch die von ihr ausgelöste Verschwenkgeschwindigkeit des Winkels bei Vorwärtsfahrt und bei Rückwärtsfahrt nicht mehr zwangsläufig die gleiche ist. Man kann also bei der Vorwärtsfahrt mit einer anderen Schwenkgeschwindigkeit, insbesondere einem anderen Bewegungsablauf des Winkels arbeiten als bei Rückwärtsfahrt. Dies ist beim Aufrichten und Aneinanderreihen empfindlicher Produkte wie Hygienepapiererzeugnissen, die äußerlich leicht beschädigt oder eingebeult werden könnten, von großer Bedeutung.

Damit die Übergabe der Produkte von dem sie tragenden Flügel des Winkels zur Abführbahn schnell und trotzdem ohne die Gefahr eines Umkippens der Produkte möglich ist, empfiehlt es sich, die Drehbewegung des Winkels gegen Ende seiner zur Abführbahn gerichteten Verschiebebewegung zu verzögern. Das Produkt hat daher bei der Übergabe auf die Abführbahn praktisch nur noch eine translatorische Bewegungskomponente und keine das Umkippen begünstigende Schwenkbewegung mehr in sich.

Selbstverständlich kann auch die translatorische Bewegung des Winkels mit zur Abführbahn hin verzögerter Geschwindigkeit erfolgen. Dies gilt ebenso wie die verzögerte Drehbewegung insbesondere für die jeweils erste Produktreihe eines neuen Gebindes, wohingegen sich die nachfolgenden Produktreihen meist etwas an der davor befindlichen abstützen können.

Die Drehung des Winkels kann durch verschiedene Maßnahmen herbeigeführt werden, etwa durch einen Druckzylinder oder durch Federkraft, wobei ein Anschlag die Entspannung der Feder allmählich längs des Verschiebeweges zuläßt, ebenso aber auch durch einen Exzenter oder durch eine Kulissenbahn. In all diesen Fällen ist die Möglichkeit gegeben, automatisch während des Verschiebens des Winkels die Drehung in der gewünschten Geschwindigkeit zu erzeugen.

Die Verschiebung des Winkels erfolgt vorzugsweise längs beidseits angeordneter Führungsstangen. Diese Führungsstangen können auch höhenverstellbar sein, damit der Winkel jeweils von unten an die zu übernehmenden Produkte herangefahren und nach der Übergabe wieder zunächst ein Stück nach unten wegtauchen kann. Es liegt aber ebenso im Rahmen der Erfindung, die vertikale Verfahrbarkeit der Winkel auf andere Weise zu realisieren.

Um eine sichere Übergabe der Produkte von der Zuführbahn auf den Winkel und vom Winkel auf die Abführbahn sicherzustellen, empfiehlt es sich, die Flügel des Winkels als Kamm auszubilden, so daß sie mit entsprechenden kammartigen Lagerflächen der Zuführ- und der Abführbahn korrespondieren.

Weitere Merkmale und Vorteile der Erfindung ergeben sich aus der nachfolgenden Beschreibung eines Ausführungsbeispieles anhand der Zeichnung; dabei zeigt:

Fig. 1    eine Seitenansicht der Gesamtanlage;

Fig. 2    eine vergrößerte Darstellung der Wendeeinheit zu Beginn des Wendevorganges;

Fig. 3    die gleiche Darstellung beim Zurückfahren nach Vollendung des Wendevorganges und

Fig. 4    den Antrieb bzw. die Steuerung der Wendeeinheit.

Die zu verpackenden Produkte, insbesondere Hygienepapierrollen 1 kommen paarweise oder mehrfach nebeneinander liegend auf einem Förderband 2 an und werden von ihm auf eine Zuführbahn 3 geschoben. Diese Zuführbahn 3 ist im Ausführungsbeispiel als Hubtisch ausgebildet, um die hintereinander liegenden Produktreihen zu separieren und sie jeweils reihenweise einer Wendeeinheit mit einem schwenkbaren Winkel 4 zuzuführen. Zu diesem Zweck ist der Hubtisch 3 kammartig mit in Förderrichtung laufenden Längsschlitzen versehen, durch welche der ebenfalls kammartig ausgebildete horizontale Schenkel 4a des Flügels 4 hindurchtritt.

Die Zeichnung zeigt außerdem einen Abschieber 5, der die auf dem Hubtisch 3 liegende Produktreihe in den Winkel 4 hineinschiebt, bis sie an dem senkrecht zum Schenkel 4a verlaufenden Schenkel 4b anliegt.

Nach links schließt sich an die Wendeeinheit eine Abführbahn 6 an, auf der die um 90° aufgestellten Produkte lückenlos abgestellt werden, was später noch näher beschrieben wird. Selbstverständlich können die zuführbahn 2 und die Abführbahn 6 räumlich anders einander zugeordnet sein, denn je nach konstruktiver Ausbildung der Wendeeinheit und des Hubtisches 3 lassen sich gleichzeitig während des Aufrichtevorganges auch mehr oder weniger große Höhenunterschiede überbrükken.

Wesentlich ist nun, daß der Winkel 4 nicht um eine ortsfeste Achse umläuft, sondern daß er neben einer hin- und hergehenden Schwenkbewegung insgesamt eine Verschiebebewegung annähernd in Abführrichtung der Produkte durchzuführen vermag.

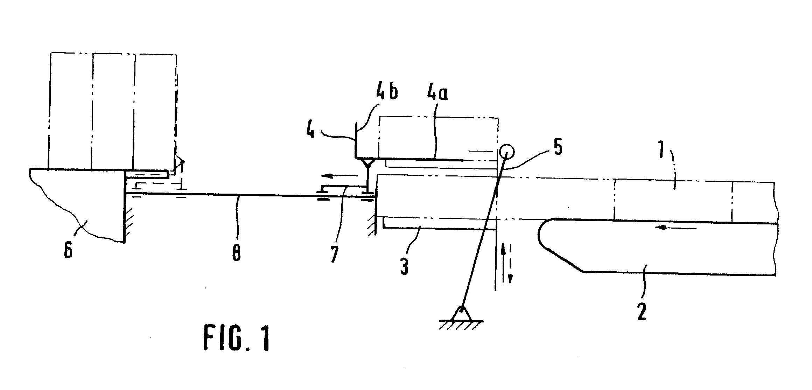

Hierzu ist der Winkel 4 an einem Schlitten 7 gelagert, der seinerseits an zwei außen liegenden Führungsstangen 8 verschiebbar geführt ist. Die Führungsstangen münden auf einer solchen Höhe an der Abführbahn 6, das der Schenkel 4b nach seiner 90° Klappung entsprechend der gestrichelt gezeichneten Position in Fig. 1 etwas unterhalb der kammartig ausgebildeten Lagerfläche der Abführbahn zu liegen und damit vom Produkt freikommt.

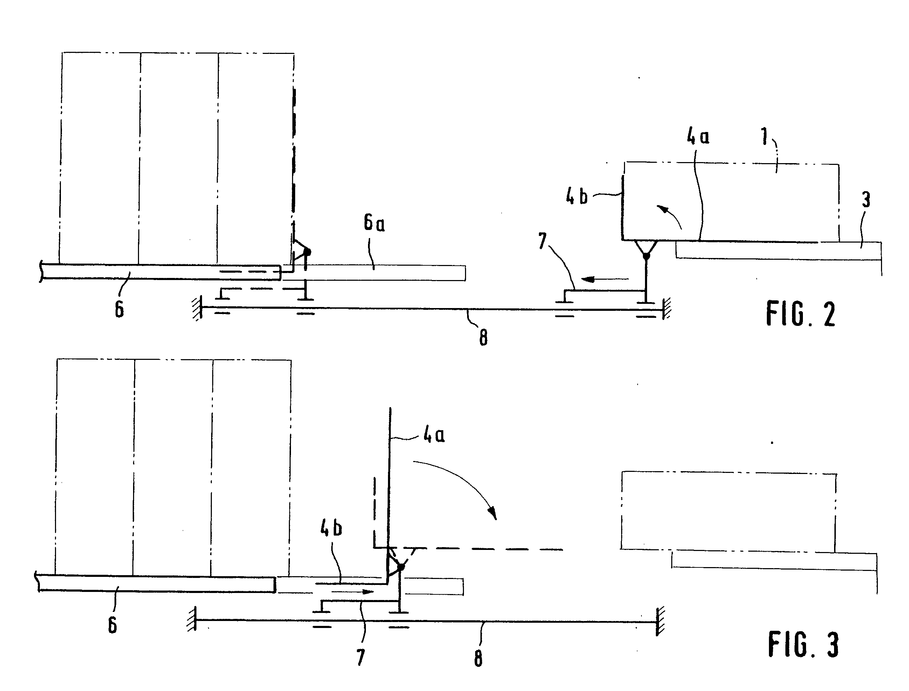

Zum besseren Verständnis wird nachfolgend ein Arbeitstakt anhand der Figuren 2 und 3 beschrieben.

Von dem ankommenden Produktstrom wird gemäß Fig. 3 die vordere Produktreihe durch den Hubtisch 3 separiert und soweit angehoben, daß die Produktunterseite geringfügig oberhalb des nach rechts ragenden Schenkels 4a des Winkels 4 zu liegen kommt. Dadurch ist sichergestellt, daß beim Einfahren des Winkels 4 in die gezeichnete Position die Produktunterseite nicht beschädigt wird.

Es kann nun entweder der Hubtisch 3 soweit abgesenkt werden, daß das Produkt nur noch in dem Winkel 4 ruht, oder, was günstiger ist, der Winkel 4 beginnt seine Schwenkbewegung vor der translatorischen Verschiebebewegung und kommt dadurch in Eingriff mit der Produktreihe. Die weitere Schwenkbewegung des Winkels 4 erfolgt sodann kombiniert mit der translatorischen Verschiebebewegung des Winkels nach links bis die gestrichelt dargestellte Position in Fig. 3 erreicht ist. Gleichzeitig mit der Übergabe der Produktreihe vom Winkel 4 auf die Abführbahn 6 schiebt die Produktreihe die davor stehenden Produktreihen nach vorn.

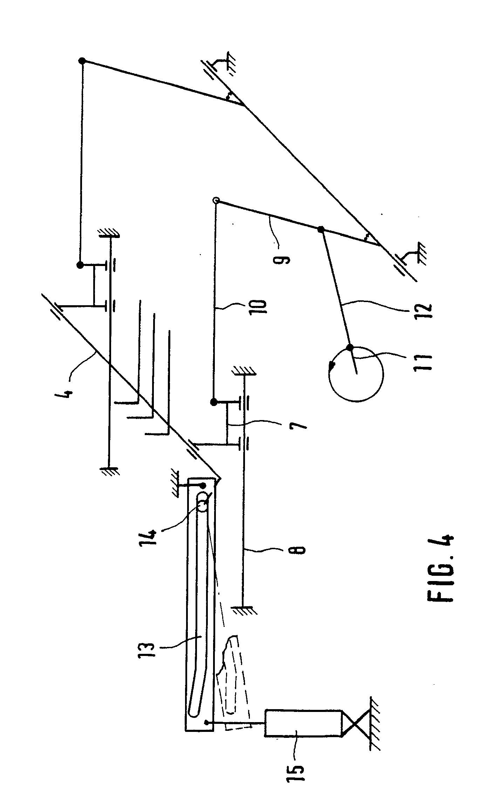

Anschließend fährt der Winkel 4 wieder zurück und wird, wie Fig. 4 zeigt, dabei auch wieder in die Ausgangsstellung zurückgedreht. Dieses Rückdrehen erfolgt auf einer ganz kurzen Wegstrecke, also nahezu schlagartig, wohingegen die in Fig. 3 erfolgende Vorwärtsdrehung wegen des Produktes allmählich und schonend verlaufen muß.

Die diesbezügliche Steuerung geht aus Fig. 4 hervor. man sieht dort, daß die translatorische Verschiebebewegung der Schlitten 7 und des daran gelagerten Winkels 4 über Schwenkhebel 9 erfolgt, die an ihrem unteren Ende am Maschinengestell gelagert sind, während sie an ihrem oberen Ende schwenkbar mit einer Schubstange 10 verbunden sind. Der Antrieb der Schwenkhebel 9 erfolgt durch eine umlaufende Kurbelwelle 11, die über einen Lenkhebel 12 in der unteren Hälfte des Schwenkhebels 9 angreift. Es kommt dadurch noch zu einer Verstärkung der von der Kurbelwelle 11 erzeugten Hubbewegung.

Die Drehbewegung des Winkels 4 wird hingegen von einer Führungsbahn 13 erzeugt. Mit ihr steht der Winkel 4 über einen Lenkhebel 14 in Eingriff. Ansich kann allein mit einer entsprechend geschwungenen Führungsbahn die gewünschte Verdrehung des Winkels 4 während der translatorischen verschiebebewegung herbeigeführt werden, wobei aber nicht der vorteilhafte unterschiedliche Bewegungsablauf in der Vor- und Rückwärtsbewegung erzeugt werden kann. Es empfiehlt sich deshalb, das im Vergleich zur Vorwärtsbewegung schnellere Zurückdrehen des Winkels 4 bei der Rückwärtsbewegung durch eine unterschiedliche Lage der Führungsbahn 13 herbeizuführen. Dazu ist die Führungsbahn 13 an ihrem rechten Ende am Maschinengestell gelagert, während ihr linkes Ende mit einem Pneumatikzylinder 15 verbunden ist, so daß die Führungsbahn vertikal verstellbar ist. Dadurch wird bei Vorwärtsfahrt des Schlittens 7 die Drehbewegung des Winkels 4 sofort begonnen und vor Erreichen der linken Endlage des Schlittens abgeschlossen, wohingegen bei der Rückwärtsfahrt des Schlittens 7 die Rückdrehung des Winkels 4 erst dann beginnt, wenn der Schenkel 4 b das auf der Abführbahn 6 abgestellte Produkt verlassen hat, das heißt, wenn sich der Schenkel 4 b nicht mehr unterhalb des abgestellten Produktes befindet. Außerdem muß dieRückdrehung bereits so frühzeitig abgeschlossen sein, daß der Schenkel 4 a die auf dem Hubtisch 3 liegenden Produkte unterfahren kann.

In den Figuren 2 und 3 ist der Winkel 4 selbst nicht höhenverstellbar. Deshalb ist die Abführbahn 6 mit einer kammartigen Verlängerung 6 a versehen, durch welche der Winkel 4 hindurchtreten kann. Dadurch kommt der horizontale Schenkel 4 b bereits vor Erreichen seiner horizontalen Endlage vom Produkt frei und übergibt das Produkt auf den etwas höher gelegenen Teil 6 a der Abführbahn 6.

Die synchrone Steuerung der Kurbelwelle 11, des Pneumatikzylinders 15 sowie der die Produkte zuführenden und abführenden Elemente ist an sich bekannt und deshalb hier nicht näher erläutert. Es sei lediglich noch darauf hingewiesen, daß die Zuordnung des Schlittens 7 zur Stellung der Kurbelwelle 11 so gewählt ist, daß die von der Kurbelwelle 11 abgeleitete Verschiebung des Schlittens am Anfang und am Ende des Verschiebeweges jeweils sanft beschleunigt bzw. sanft verzögert wird. Dies in Verbindung mit der Steuerung des Pneumatikzylinders 15 stellt auch sicher, daß die Horizontalbeschleunigung der Produkte gegen Ende der Schwenkbewegung gering bleibt und die Produkte vor einem Abkippen in Vorschubrichtung gehindert werden.

**Patentansprüche**

1. Vorrichtung zum Überführen und Wenden, insbesondere Aufrichten von Produkten (1), bestehend aus einem zweiflügeligen Winkel (4), der um eine horizontale Achse schwenkbar ist und zwischen seinen Flügeln (4a, 4b) das Produkt (1) aufnimmt, wobei er mitsamt seiner Drehlagerung (7) in Transportrichtung verschiebbar ist und während der Verschiebebewegung um etwa 90° verdreht und während der entgegengesetzten Verschiebebewegung wieder zurückgedreht wird,
dadurch gekennzeichnet,       ·
daß der Winkel (4) über einen Hebel (14) mit einer Führungsbahn (13) in Eingriff steht und daß die Führungsbahn (13) mittels eines Stellgliedes, insbesondere eines Druckzylinders (15) verschwenkbar ist, wobei die Produkte Hygienepapiererzeugnisse oder ähnliches sind, die auf einer Zuführbahn (2) ankommen und zur Bildung eines Gebindes auf einer Abführbahn (6) um 90° gewendet lückenlos hintereinander aufzureihen sind, indem der Winkel (4) verschiebbar zwischen Zuführbahn (2) und Abführbahn (6) angeordnet ist.

2. Vorrichtung nach Anspruch 1,
dadurch gekennzeichnet,
daß die Drehung des Winkels (4) gegen Ende seiner zur Abführbahn (6) gerichteten Verschiebebewegung verlangsamt wird.

3. Vorrichtung nach Anspruch 1,
dadurch gekennzeichnet,
daß die Führungsbahn (13) gekrümmt ist.

4. Vorrichtung nach einem der vorhergehenden Ansprüche,
dadurch gekennzeichnet,
daß die Verschiebung des Winkels (4) längs Führungsstangen (8) erfolgt.

5. Vorrichtung nach Anspruch 4,
dadurch gekennzeichnet,
daß der Winkel (4) zusätzlich in etwa vertikaler Richtung verfahrbar ist.

6. Vorrichtung nach einem der vorhergehenden Ansprüche,
dadurch gekennzeichnet,
daß die Schenkel (4a, 4b) des Winkels (4) als Kamm ausgebildet sind und mit entsprechenden kammartigen Lagerflächen der Zuführ- und der Abführbahn (2 bzw. 6) korrespondieren.

**Claims**

1. Device for the transference and turning, especially erecting, of products (1), consisting of a two-armed angle piece (4) which is pivotable about a horizontal axis and receives the product (1) between its arms (4a, 4b), while it is displaceable together with its pivot mounting (7) in the transport direction and during the displacement movement it is turned through about 90° and during the opposite displacement movement it is turned back again,
characterised in that the angle piece (4) is in engagement through a lever (14) with a guide track (13) and in that the guide track (13) is pivotable by means of a setting member, especially a pressure cylinder (15), the products being hygienic paper products or the like which arrive on a feed track (2) and for the formation of a bundle the products have to be arranged in a row on a removal track (6) gaplessly one behind the other, turned through 90°, as the angle piece (4) is arranged displaceably between feed track (2) and removal track (6).

2. Device according to Claim 1, characterised in that the rotation of the angle piece (4) is retarded towards the end of its displacement movement directed towards the removal track (6).

3. Device according to Claim 1, characterised in that the guide track (13) is curved.

4. Device according to one of the preceding Claims, characterised in that the displacement of the angle piece (4) takes place along guide rods (8).

5. Device according to Claim 4, characterised in that the angle piece (4) is additionally mobile in an approximately vertical direction.

6. Device according to one of the preceding Claims, characterised in that the sides (4a, 4b) of the angle piece (4) are formed as combs and ccrrespond with corresponding comb-type bearing surfaces of the feed track (2) and the removal track (6).

**Revendications**

1. Dispositif destiné à transférer et à renverser, notamment à mettre debout, des produits (1), constitué d'une équerre à deux branches (4) qui peut pivoter autour d'un axe horizontal et reçoit le produit (1) entre ses branches (4a,4b), l'équerre pouvant être déplacée en translation dans la direction de transport conjointement avec son palier de rotation, et étant tournée à environ 90° pendant le mouvement de translation, puis ramenée par rotation pendant le mouvement de translation en direction opposée,
caractérisé en ce que l'équerre (4) est en prise avec une coulisse (13) par l'intermédiaire d'un levier (14), et en ce que la coulisse (13) peut être pivotée au moyen d'un organe de commande, notamment un vérin pneumatique ou hydraulique (15), les produits étant des articles en papier hygiénique ou similaires, qui arrivent sur une voie d'amenée (3) et doivent être alignés les uns derrière les autres sur une voie d'évacuation (6) sans lacunes et en étant renversés à 90°, afin de former un colis, l'équerre (4) étant à cet effet disposée avec possibilité de translation entre la voie d'amenée (3) et la voie d'évacuation (6).

2. Dispositif selon la revendication 1, caractérisé en ce que la rotation de l'équerre (4) est ralentie vers la fin de son mouvement de translation vers la voie d'évacuation (6).

3. Dispositif selon la revendication 1, caractérisé en ce que la coulisse (13) est incurvée.

4. Dispositif selon l'une des revendications précédentes, caractérisé en ce que le déplacement en translation de l'équerre (4) s'effectue le long de tiges de guidage (8).

5. Dispositif selon la revendication 4, caractérisé en ce que l'équerre (4) peut en outre être déplacée en direction approximativement verticale.

6. Dispositif selon l'une des revendications précédentes, caractérisé en ce que les branches (4a,4b) de l'équerre (4) sont configurées à la manière de peignes et correspondent avec des surfaces de pose correspondantes, du genre peignes, de la voie d'amenée (3) et de la voie d'évacuation (6).

FIG. 1

EP 0 294 710 B1

EP 0 294 710 B1

FIG. 2

FIG. 3

FIG. 4